# EUROPEAN PATENT APPLICATION

(11) **EP 4 467 377 A1**
(43) Date of publication of application: **27.11.2024**
(21) Application number: 23211898.4
(22) Date of filing: 24.11.2023
(51) Int. Cl.: B60K 35/22, B60K 35/23, B60K 35/29, B60K 35/81, G02F 1/13357, H04N 5/57, G09G 3/00

(54) **DISPLAY APPARATUS FOR VEHICLE**

(30) Priority: 24.05.2023 KR 20230066980
(71) Applicant: LG Electronics Inc., Yeongdeungpo-gu Seoul 07336 (KR)
(72) Inventor: KIM, Jinyong, Seoul 06772 (KR); CHOI, Byoungjoon, Seoul 06772 (KR); JUNG, Youngho, Seoul 06772 (KR)
(74) Representative: Vossius & Partner Patentanwälte Rechtsanwälte mbB

(57) **Abstract**

The present disclosure relates to a display apparatus for a vehicle. According to an embodiment of the display apparatus for a vehicle includes: a picture generation device; an optical path separator to reflect a first projection from the picture generation device; a light transmittance changer to change light transmittance of the first projection image; a screen onto which the first projection image passing is projected; and a signal processing device to control light transmittance of the light transmittance changer, wherein the picture generation device outputs a second projection image to a windshield. Accordingly, a luminance difference between the first projection image projected onto the screen and the second projection image reflected on the windshield may be reduced while implementing a plurality of displays in an integrated manner.

## Description

### BACKGROUND

### 1. Field

The present disclosure relates to a display apparatus for a vehicle, and more particularly to a display apparatus for a vehicle that can not only reduce the difference in illumination between a first projection image projected onto a screen and a second projection image reflected on a windshield, but also implement a plurality of displays in an integrated manner.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is disposed in a cluster of a vehicle to display various types of information. In order to display vehicle driving information, various displays, such as an audio video navigation (AVN) display and a head-up display that outputs a projection image to a windshield, are increasingly being mounted in the vehicle, in addition to the cluster.

As various displays are provided in the vehicle, a method for operating the displays in an integrated manner is being studied.

Meanwhile, Japanese Laid-open Patent Publication No. 11-59224 (hereinafter referred to as "Related Art Document 1"), which is hereby incorporated by reference, discloses a front window display device that adjusts the brightness of a head-up display (HUD) of the window display device using data of an illuminance sensor.

However, since information about the window display device is only disclosed, Related Art Document 1 has a limitation in that the integrated operation of various displays is difficult.

Meanwhile, U.S. Patent Publication No. US10298890 (hereinafter referred to as "Related Art Document 2"), which is hereby incorporated by reference, discloses a vehicle display device that projects an image using a cluster display.

However, since information about the cluster display is only disclosed, Related Art Document 2 has a limitation in that the integrated operation of various displays is difficult.

### SUMMARY

The present disclosure describes a display apparatus for a vehicle that can not only reduce the difference in luminance between a first projection image projected onto a screen and a second projection image reflected on a windshield but also implement a plurality of displays in an integrated manner.

The present disclosure also describes a display apparatus for a vehicle that can reduce the difference in luminance between a first projection image projected onto a screen, based on external illumination or internal illumination, and a second projection image reflected on a windshield.

According to one aspect of the subject matter described in this application, a display apparatus for a vehicle includes: a picture generation device including a light output device and configured to output a projection image; an optical path separator configured to reflect a first projection image corresponding to a part of the projection image from the picture generation device; a light transmittance changer configured to change light transmittance of the first projection image reflected from the optical path separator; a screen having one surface onto which the first projection image passing through the light transmittance changer is projected; and a signal processing device configured to control light transmittance of the light transmittance changer, wherein the picture generation device outputs a second projection image corresponding to another part of the projection image to a windshield.

The signal processing device may be configured to, in case in which luminance of the first projection image reflected from the optical path separator is greater than luminance of the second projection image reflected from the windshield and a luminance difference between the first projection image and the second projection image increases, decrease the light transmittance of the first projection image.

The signal processing device may be configured to control the light transmittance of the first projection image to be lower at night than during day.

The signal processing device may be configured to control output power of the light output device to be lower at night than during day.

The signal processing device may be configured to control the light transmittance of the first projection image to be at a first level in a first mode, and control the light transmittance of the first projection image to be at a second level in a second mode.

The signal processing device may be configured to, in case in which a luminance difference between the second projection image and the first projection image is a first value in the first mode, control, in the second mode, the luminance difference between the second projection image and the first projection image to be a second value lower than the first value.

The signal processing device may be configured to change internal illumination of the vehicle, or a setting input, the light transmittance of the first projection image based on at least one of external illumination of the vehicle.

The signal processing device may be configured to decrease the light transmittance of the first projection image, in response to an increase in difference between external illuminance of the vehicle and internal illuminance of the vehicle.

The signal processing device may be configured to control, for each frame, luminance of the first projection image output from the light output device to be less than luminance of the second projection image output from the light output device.

The signal processing device may be configured to: output the first projection image and the second projection image from the the light output device at a first frame rate in a first mode; and output the first projection image and the second projection image from the light output device at a second frame rate greater than the first frame rate control in a second mode after the first mode, while controlling luminance of the first projection image output from the light output device to be less than luminance of the second projection image output from the light output device.

The light output device may include a light source and a digital mirror device configured to reflect light output from the light source. The signal processing device may be configured to turn off an area corresponding to the first projection image of the digital mirror device during a first period.

The signal processing device may be configured to switch on or off an area corresponding to the second projection image of the digital mirror device during the first period.

The light output device may include a light source and a liquid crystal panel configured to output the first projection image and the second projection image based on light output from the light source. The signal processing device may be configured to turn off an area corresponding to the first projection image of the liquid crystal panel during a first period.

The signal processing device may be configured to switch on or off an area corresponding to the second projection image of the liquid crystal panel during the first period.

The light transmittance changer may be attached onto the one surface of the screen.

The display apparatus may further include a diffusion portion disposed between the picture generation device and the windshield.

The light transmittance changer may include an electrochromic material, a liquid crystal, or a suspended particle.

According to another aspect, a display apparatus for a vehicle includes: a picture generation device including a light output device and configured to output a projection image; a light transmittance changer configured to change light transmittance of a first projection image corresponding to a part of the projection image from the picture generation device; an optical path separator configured to reflect the first projection image passing through the light transmittance changer, a screen having one surface onto which the first projection image reflected from the optical path separator is projected; and a signal processing device configured to control light transmittance of the light transmittance changer, wherein the picture generation device outputs a second projection image corresponding to another part of the projection image to a windshield.

### BRIEF DESCRIPTION OF THE DRAWINGS

FIG. 1 is a view showing an example of the exterior and interior of a vehicle.
FIG. 2 is a view showing the outer appearance of a display apparatus for a vehicle according to an embodiment of the present disclosure.
FIG. 3 illustrates an example of an internal block diagram of the display apparatus for a vehicle of FIG. 2.
FIG. 4A is a view showing an internal configuration of a display apparatus for a vehicle according to one embodiment of the present disclosure.
FIG. 4B is a view showing an internal configuration of a display apparatus for a vehicle according to another embodiment of the present disclosure.
FIGS. 4C and 4D are reference views for explaining the operation of the display apparatus for a vehicle of FIG. 4A or 4B.
FIG. 5 illustrates one example of an internal block diagram of the display apparatus for a vehicle of FIGS. 4A to 4B.
FIG. 6 illustrates another example of an internal block diagram of the display apparatus for a vehicle of FIGS. 4A to 4B.
FIG. 7 is a flowchart illustrating an example of the operation of a display apparatus for a vehicle according to an embodiment of the present disclosure.
FIGS. 8A to 11D are reference views for explaining FIG. 7.
FIG. 12 illustrates yet another example of an internal block diagram of the display apparatus for a vehicle of FIGS. 4A to 4B.
FIG. 13 illustrates yet another example of an internal block diagram of the display apparatus for a vehicle of FIGS. 4A to 4B.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

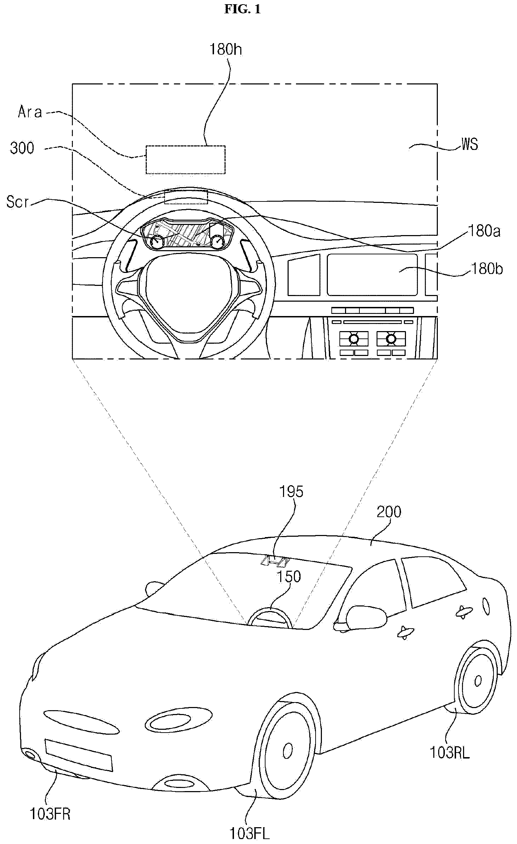

FIG. 1 illustrates an example of the exterior and interior of a vehicle.

Referring to FIG.1, a vehicle 200 may include a plurality of wheels 103FR, 103FL, 103RL,... rotated by a power source and a steering wheel 150 configured to adjust a traveling direction of the vehicle 200.

The vehicle 200 may further include a camera 195 configured to acquire an image of the front of the vehicle.

The vehicle 200 may further include therein a plurality of displays 180a, 180b, and 180h to display images, information, and the like.

For example, the plurality of displays 180a, 180b, and 180h may be configured such that a first display 180a is a cluster display, a second display 180b is an audio video navigation (AVN) display, and a third display 180h is a head-up display (HUD) configured to project an image in a predetermined area Ara of a windshield WS.

In the present disclosure, among the plurality of displays 180a, 180b, and 180h, the first display 180a and the third display 180h are integrated and implemented as a single device.

To this end, a display apparatus for a vehicle or vehicle display apparatus 100 according to embodiments of the present disclosure includes a picture generation device 300.

That is, the vehicle display apparatus 100 according to embodiments of the present disclosure outputs a plurality of projection images using a single light output device 300, and separates optical paths of the plurality of projection images so that a first projection image is projected, through a first optical path, onto a screen Scr to display cluster information and a second projection image is projected, through a second optical path, onto a windshield WS to display vehicle driving information. Accordingly, a plurality of displays may be implemented in an integrated manner.

Meanwhile, the vehicle 200 described herein may be a concept including all of an internal combustion engine vehicle having an engine as a power source, a hybrid vehicle having an engine and an electric motor as power sources, and an electric vehicle having an electric motor as a power source.

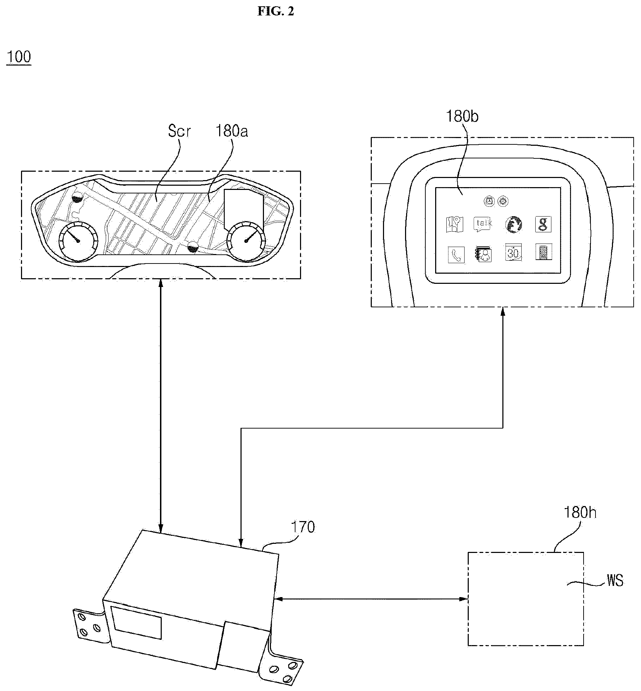

FIG. 2 illustrates the outer appearance of a display apparatus for a vehicle according to an embodiment of the present disclosure.

The vehicle display apparatus 100 according to an embodiment of the present disclosure may include a signal processing device 170 configured to perform signal processing to display an image and information on at least one of a plurality of displays 180a, 180b, and 180h.

As for the plurality of displays 180a, 180b, and 180h, a first display 180a may be a cluster display 180a for displaying a driving state and operation information, a second display 180b may be an audio video navigation (AVN) display 180b for displaying vehicle driving information, a navigation map, various types of entertainment information, or an image, and a third display 180h may be a HUD display 180h for displaying vehicle driving information.

The signal processing device 170 may include therein a memory 508 and a processor 175 to control at least one of the plurality of displays 180a, 180b, and 180h.

Meanwhile, the signal processing device 170 may execute first to third virtual machines (not shown) on a hypervisor 505 in the processor 175.

The first virtual machine (not shown), which is a server virtual machine, may control the second virtual machine (not shown) and the third virtual machine (not shown), which are guest virtual machines.

Meanwhile, the second virtual machine may be referred to as a first guest virtual machine, and the third virtual machine may be referred to as a second guest virtual machine.

The first guest virtual machine (not shown) may be operated for the first display 180a, and the second guest virtual machine (not shown) may be operated for the second display 180b or the third display 180h.

Meanwhile, the server virtualization machine (not shown) in the processor 175 may be configured to set the memory 508 based on the hypervisor 505 for transmission of the same data to the first guest virtualization machine (not shown) and the second guest virtualization machine (not shown). Accordingly, the first display 180a and the second display 180b in the vehicle may display the same information or the same image in a synchronized manner.

Meanwhile, the server virtualization machine (not shown) in the processor 175 may receive and process wheel speed sensor data of the vehicle to transmit the processed wheel speed sensor data to at least one of the first guest virtualization machine (not shown) and the second guest virtualization machine (not shown). Accordingly, at least one virtual machine may share the wheel speed sensor data of the vehicle.

Thus, the plurality of displays 180a, 180b, and 180h may be controlled using a single signal processing device 170.

Meanwhile, some of the plurality of displays 180a, 180b, and 180h may operate under a Linux-based operating system (OS), and others may operate under a Web-based operating system (OS).

In some implementations, the signal processing device 170 may control the plurality of displays 180a, 180b, and 180h operating under various operating systems (OS) to display the same information or the same image in a synchronized manner.

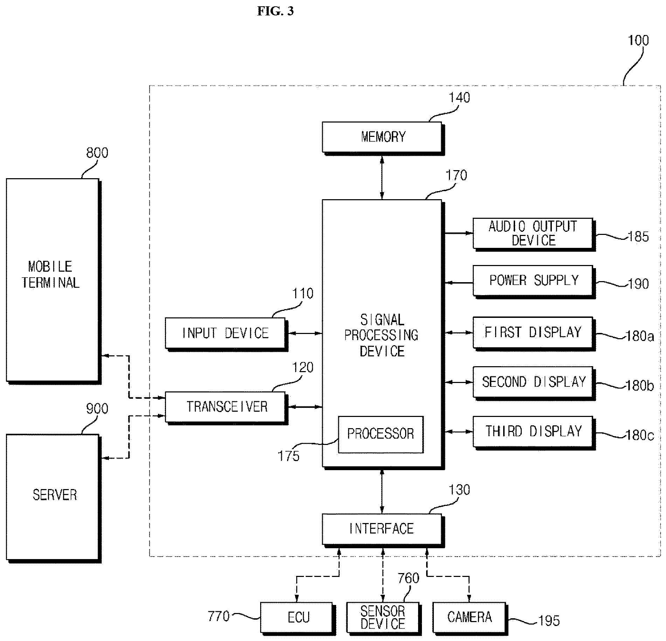

FIG. 3 illustrates an example of an internal block diagram of a display apparatus for a vehicle according to an embodiment of the present disclosure.

Referring to FIG. 3, the vehicle display apparatus 100 according to the embodiment of the present disclosure may include an input device 110, a transceiver 120, an interface 130, a memory 140, a signal processing device 170, a plurality of displays 180a, 180b, and 180h, an audio output device 185, and a power supply 190.

The input device 110 may include a physical button or pad for a button input or a touch input.

Meanwhile, the input device 110 may include a microphone (not shown) for a user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, Wi-Fi Direct, and APIX, may be used as a wireless data communication scheme.

The transceiver 120 may receive weather information and road traffic condition information, e.g., transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle heading information, vehicle position information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, or an in-vehicle humidity sensor. The position module may include a GPS module to receive GPS information.

Meanwhile, the interface 130 may receive front-of-vehicle image data, side-of-vehicle image data, rear-of-vehicle image data, and obstacle-around-vehicle distance information from a camera 195 or a lidar (not shown), and may transmit the received information to the signal processing device 170.

The memory 140 may store various data necessary for the overall operation of the vehicle display apparatus 100, such as programs for processing or control of the signal processing device 170.

For example, the memory 140 may store data regarding the hypervisor, the server virtual machine (not shown), and a plurality of guest virtual machines executed in the processor.

The audio output device 185 may convert an electrical signal from the signal processing device 170 into an audio signal so as to output the audio signal. To this end, the audio output device 185 may include a speaker, etc.

The power supply 190 may supply power required to operate components under control of the signal processing device 170. In particular, the power supply 190 may receive power from a battery in the vehicle.

The HUD display 180h, which is the third display, may include the picture generation device 300 of FIG. 1 to project an image, and may output an augmented reality-based object under the control of the signal processing device 170.

For example, the HUD display 180h may output vehicle speed information, vehicle traveling direction information, a front vehicle object, a distance indicator showing a distance from a vehicle ahead, and the like.

As another example, the HUD display 180h may output an augmented reality lane carpet, an augmented reality route carpet, or an augmented reality dynamic carpet corresponding to a road image.

The signal processing device 170 may control the plurality of displays 180a, 180b, and 180h.

The signal processing device 170 may control the overall operation of each device or unit in the vehicle display apparatus 100.

For example, the signal processing device 170 may include a processor 175 configured to perform signal processing for the memory 508 and the displays 180a and 180b.

The processor 175 may execute the hypervisor (not shown), and may execute the server virtual machine (not shown) and the plurality of guest virtual machines (not shown) on the executed hypervisor.

Here, the first guest virtual machine (not shown) may be operated for the first display 180a, and the second guest virtual machine (not shown) may be operated for the second display 180b or the third display 180h.

Meanwhile, the signal processing device 170 may process various signals, such as an audio signal, an image signal, and a data signal. To this end, the signal processing device 170 may be implemented in the form of a system on chip (SOC).

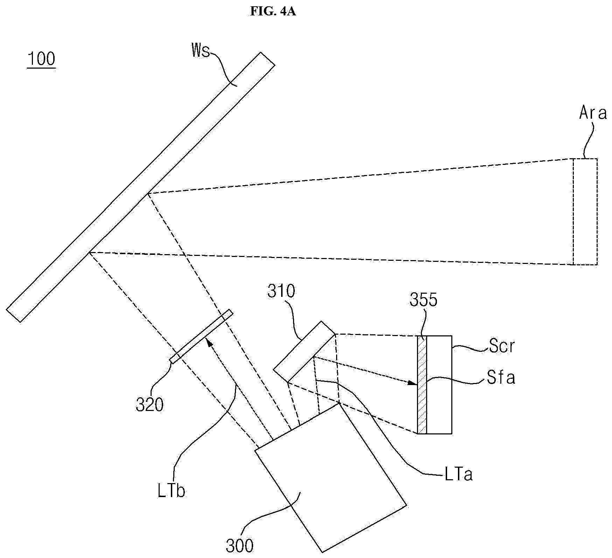

FIG. 4A illustrates an internal configuration of a display apparatus for a vehicle according to an embodiment of the present disclosure.

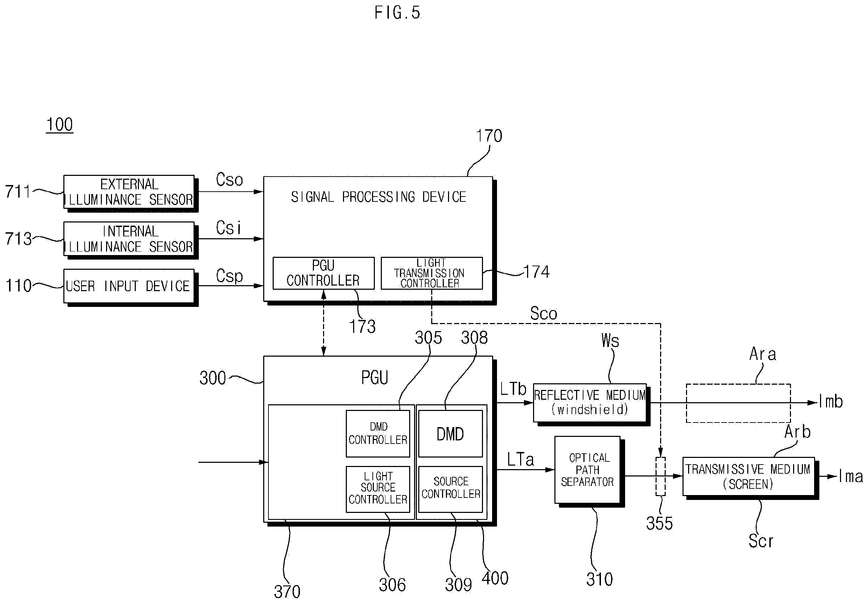

Referring to FIG. 4A, the vehicle display apparatus 100 of this embodiment includes a picture generation device 300 configured to output a projection image, an optical path separator 310 configured to reflect a first projection image LTa, which is part of the projection image from the picture generation device 300, a light transmittance changer 355 configured to change light transmittance of the first projection image LTa reflected from the optical path separator 310, a screen Scr having one surface Sfa onto which the first projection image LTa that has passed through the light transmittance changer 355 is projected, and a signal processing device 170 of FIG. 5 configured to control light transmittance of the light transmittance changer 355.

The signal processing device 170 of FIG. 5 may output an electrical signal to control the light transmittance of the light transmittance changer 355.

As the first projection image LTa that has passed through the light transmittance changer 355 is projected onto the one surface Sfa of the screen Scr, a cluster display may be implemented or realized.

Meanwhile, the picture generation device 300 outputs a second projection image LTb, which is another part of the projection image, to a windshield WS.

The second projection image LTb reflected from the windshield WS is output to an area Ara, which is the driver's line of sight. Accordingly, the driver may recognize that a virtual image exists in a predetermined area that is the front of the windshield WS. Thus, a head-up display (HUD) may be implemented based on the second projection image LTb.

Meanwhile, the light transmittance of the light transmittance changer 355 may vary, and accordingly, a luminance difference between the first projection image LTa projected onto the screen Scr and the second projection image LTb reflected on the windshield WS may be reduced while implementing a plurality of displays 180a and 180h in an integrated manner.

For example, in case in which a projection image is output from the picture generation device 300, a first projection image LTa, which is part of the projection image, passes through the optical path separator 310 and a first optical path, e.g., the screen Scr, and a second projection image LTb, which is another part of the projection image, passes through a second optical path, e.g., being reflected from the windshield WS.

Meanwhile, as shown in the drawing, although the luminance of a projection image is the same in the picture generation device 300, since an optical path of the first projection image LTa and an optical path of the second projection image LTb are different, luminance of a projection image displayed on the screen Scr and luminance of a projection image reflected from the windshield WS may be different.

Here, as light transmittance of the screen Scr and light reflectance of the windshield WS are fixed, a difference between the luminance of the projection image displayed on the screen Scr and the luminance of the projection image reflected from the windshield WS may, preferably, be adjusted or reduced by adjusting light transmittance of the optical path separator 310.

Thus, in the present disclosure, the light transmittance changer 355 is disposed between the optical path separator 310 and the screen Scr, and the light transmittance of the light transmittance changer 355 is varied based on an electrical signal of the signal processing device 170.

Meanwhile, the light transmittance changer 355 may include an electrochromic material, a liquid crystal, or a suspended particle that varies in light transmittance based on an electrical signal of the signal processing device 170.

Accordingly, a luminance difference between the first projection image LTa projected onto the screen Scr and the second projection image LTb reflected on the windshield WS may be reduced while integrating the plurality of displays 180a and 180h.

Meanwhile, the light transmittance changer 355 may be attached onto one surface Sfa of the screen Scr. FIG. 4A illustrates that the light transmittance changer 355 is attached to a rear surface Sfa of the screen Scr, from the driver's perspective, instead of a front surface of the screen Scr.

Accordingly, a luminance difference between the first projection image LTa projected onto the screen Scr and the second projection image LTb reflected on the windshield WS may be reduced while integrating the plurality of displays 180a and 180h.

Meanwhile, the vehicle display apparatus 100 of this embodiment may further include a diffusion portion 320 disposed between the picture generation device 300 and the windshield WS. Accordingly, the second projection image LTb may be diffused and output to the windshield WS.

The diffusion portion 320 and the screen Scr may each be made of a light-transmitting material.

Here, the diffusion portion 320 may have greater light transmittance than the screen Scr. Accordingly, the second projection image LTb may be diffused and output to the windshield WS.

Meanwhile, as shown in the drawing, by using the projection image output from a single picture generation device 300, the plurality of displays 180a and 180h may be implemented in an integrated manner, thereby achieving a compact vehicle display 100.

Meanwhile, unlike shown in the drawing, the optical path separator 310 may reflect a first projection image LTa, which is part of the projection image from the picture generation device 300, and may transmit a second projection image LTb, which is another part of the projection image.

To this end, the optical path separator 310 may include a polarization beam splitter.

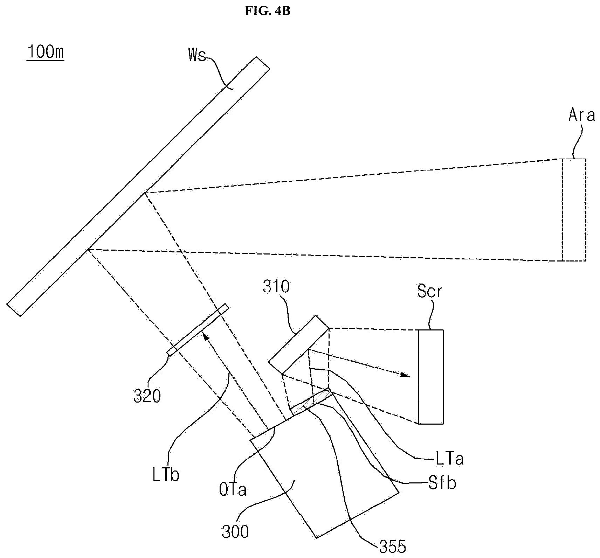

FIG. 4B illustrates an internal configuration of a display apparatus for a vehicle according to another embodiment of the present disclosure.

Referring to FIG. 4B, a vehicle display apparatus 100m of this embodiment is similar to the vehicle display apparatus 100 of FIG. 4A, but differs in terms of the light transmittance changer 355.

The vehicle display apparatus 100m of this embodiment includes a picture generation device 300 configured to output a projection image, a light transmittance changer 355 configured to reflect a first projection image LTa, which is part of the projection image from the picture generation device 300, an optical path separator 310 configured to reflect the first projection image LTa that has passed through the light transmittance changer 355, a screen Scr having one surface onto which the reflected first projection image LTa is projected, and a signal processing device 170 configured to control light transmittance of the light transmittance changer 355.

The picture generation device 300 in the vehicle display apparatus 100m of this embodiment outputs a second projection image LTb, which is another part of the projection image, to a windshield WS.

Accordingly, a luminance difference between the first projection image LTa projected onto the screen Scr and the second projection image LTb reflected on the windshield WS may be reduced while implementing the plurality of displays 180a and 180h in an integrated manner.

In the drawing, it is illustrated that the light transmittance changer 355 is disposed between the picture generation device 300 and the optical path separator 310.

Meanwhile, the vehicle display apparatus 100m of this embodiment may further include a diffusion portion 320 disposed between the picture generation device 300 and the windshield WS. Accordingly, the second projection image LTb may be diffused and output to the windshield WS.

Meanwhile, as shown in the drawing, by using the projection image output from a single picture generation device 300, the plurality of displays 180a and 180h may be implemented in an integrated manner, thereby achieving a compact vehicle display 100m.

Meanwhile, unlike shown in the drawing, the optical path separator 310 may reflect a first projection image LTa, which is part of the projection image from the picture generation device 300, and may transmit a second projection image LTb, which is another part of the projection image.

Meanwhile, in some implementations, the light transmittance changer 355 may be attached onto the optical path separator 310, unlike shown in FIG. 4A or 4B.

That is, a first projection image LTa may be reflected from the optical path separator 310, and light transmittance of the first projection image LTa may be varied by the light transmittance changer 355 that is attached onto the optical path separator 310.

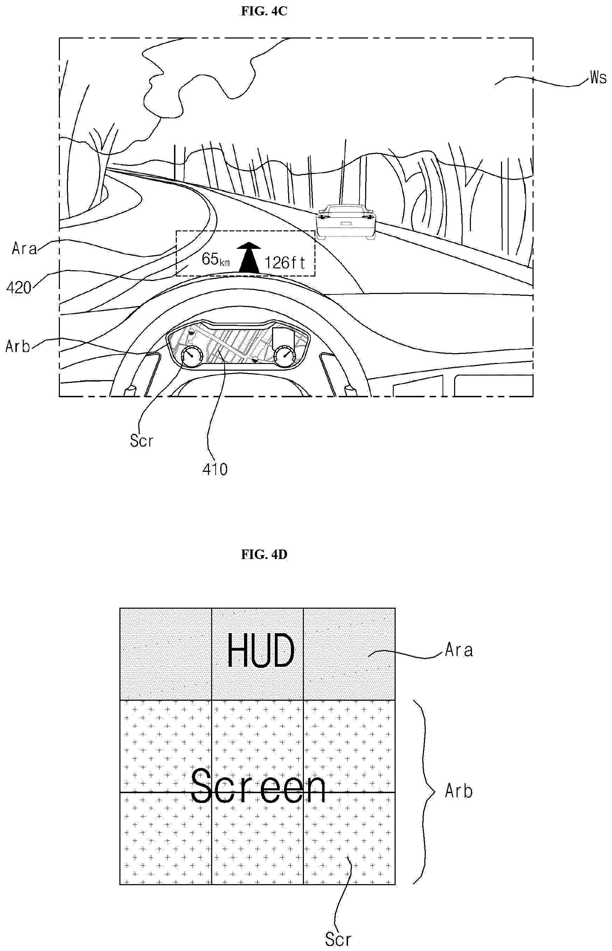

FIGS. 4C and 4D are reference views for explaining the operation of the vehicle display apparatus of FIG. 4A or FIG. 4B.

FIG. 4C illustrates that a cluster image 410 is displayed on a screen Scr, which is the first display 180a, and a virtual HUD image 420 is displayed in a predetermined area Ara, which is the front of a windshield Ws.

According to the vehicle display apparatus 100 of FIG. 4A or the vehicle display apparatus 100m of FIG. 4B, as shown in FIG. 4C, the cluster image 410 may be displayed on the screen Scr, and the HUD image 420 may be displayed in the predetermined area Ara of the windshield Ws.

FIG. 4D illustrates an area Ara where an HUD image is displayed by being reflected on a windshield Ws, together with an area Arb where a screen Scr is located.

According to the vehicle display apparatus 100 of FIG. 4A or the vehicle display apparatus 100m of FIG. 4B, as shown in FIG. 4D, the area Ara where the HUD image is displayed and the area Arb where the screen Scr is located may be displayed together, thereby implementing the plurality of displays 180a and 180h in an integrated manner.

FIG. 5 illustrates an example of an internal block diagram of the vehicle display apparatus of FIG. 4A to FIG. 4B.

Referring to FIG. 5, the vehicle display apparatus 100 according to an embodiment of the present disclosure includes a signal processing device 170, a picture generation device 300, an optical path separator 310, a light transmittance changer 355, a screen Scr, and a windshield WS.

A first projection image LTa, which is part of a projection image output from the picture generation device 300, may be reflected by the optical path separator 310. Therefore, the optical path separator 310 may also be referred to as a light reflector.

A second projection image LTb, which is another part of the projection image output from the picture generation device 300, may be output to the windshield WS, and may be reflected from the windshield WS, which is a reflective medium.

The signal processing device 170 may control the light transmittance of the light transmittance changer 355.

For example, in case in which the light transmittance changer 355 includes an electrochromic material, a liquid crystal, or a suspended particle, light transmittance of the electrochromic material, the liquid crystal, or the suspended particle may be varied by changing a level or pulse width of a light transmission control signal Sco.

In detail, as the level or pulse width of the light transmission control signal Sco output from the signal processing device 170 increases, the light transmittance of the electrochromic material, the liquid crystal, or the suspended particle may increase.

Meanwhile, the first projection image LTa that has passed through the light transmittance changer 355 may be incident on the screen Scr, allowing a cluster image Ima to be displayed.

The second projection image LTb reflected from the windshield WS may be displayed as a HUD image Imb in a predetermined area Ara.

Meanwhile, luminance of the first projection image LTa reflected from the optical path separator 310 may be greater than luminance of the second projection image LTb reflected from the windshield WS, and in case in which its difference increases, the signal processing device 170 may control light transmittance of the first projection image LTa to decrease. Accordingly, a luminance difference between the first projection image LTa projected onto the screen Scr and the second projection image LTb reflected on the windshield WS may be reduced.

Meanwhile, the signal processing device 170 may in a first mode, control the light transmittance of the first projection image LTa to be at a first level, and may in a second mode, control the light transmittance of the first projection image LTa to be at a second level. Accordingly, a luminance difference between the first projection image LTa projected onto the screen Scr and the second projection image LTb reflected on the windshield WS may be reduced.

Meanwhile, in case in which a luminance difference between the second projection image LTb and the first projection image LTa is a first value in a first mode, the signal processing device 170 may in a second mode, control the luminance difference between the second projection image LTb and the first projection image LTa to be a second value smaller than the first value. Accordingly, the difference in luminance between the first projection image LTa projected onto the screen Scr and the second projection image LTb reflected on the windshield WS may be reduced.

Meanwhile, the vehicle display apparatus 100 according to the embodiment of the present disclosure may further include an external illuminance sensor 711, an internal illuminance sensor 713, or a user input device 110.

Based on external illuminance Cso from the external illuminance sensor 711, internal illuminance Csi from the internal illuminance sensor 713, or setting input Csp from the user input device 110, the signal processing device 170 may output a control signal Sco for controlling the light transmittance of the light transmittance changer 355.

For example, in response to an increase in external illuminance Cso, the signal processing device 170 may control the light transmittance of the first projection image LTa to decrease.

As another example, in response to a decrease in internal illuminance Csi, the signal processing device 170 may control the light transmittance of the first projection image LTa to decrease.

As another example, in response to a decrease in setting input Csp, the signal processing device 170 may control the light transmittance of the first projection image LTa to decrease.

Accordingly, a luminance difference between the first projection image LTa projected onto the screen Scr and the second projection image LTb reflected on the windshield WS may be reduced.

Meanwhile, in response to an increase in difference between external illuminance of the vehicle 200 and internal illuminance of the vehicle 200, the signal processing device 170 may control the light transmittance of the first projection image LTa to decrease. Accordingly, a luminance difference between the first projection image LTa projected onto the screen Scr and the second projection image LTb reflected on the windshield WS may be reduced.

Meanwhile, the picture generation device 300 includes a light output device 400 to output light.

The light output device 400 may include a light source 309 and a digital mirror device 308 configured to reflect light output from the light source 309.

For example, the light source 309 may include an LED diode, a laser diode, or the like.

The digital mirror device 308 may include a plurality of digital mirrors. For example, the digital mirror device 308 may include a digital micromirror device (DMD).

Meanwhile, the picture generation device 300 may further include a digital mirror controller 305 to control the digital mirror device 308, and a light source controller 306 to control the light source 309.

In particular, the picture generation device 300 may include a processor 370, and the processor 370 may include the digital mirror controller 305 to control the digital mirror device 308, and the light source controller 306 to control the light source 309.

Meanwhile, the signal processing device 170 may include a picture generation controller 173 to control the picture generation device 300, and a light transmission controller 174 to control the light transmittance changer 355.

The picture generation controller 173 and the light transmission controller 174 may be provided in the processor 175 of the signal processing device 170.

Meanwhile, in order to reduce a difference in luminance between the first projection image LTa projected onto the screen Scr and the second projection image LTb reflected on the windshield WS, the signal processing device 170 may control, for each frame, the luminance of the first projection image LTa output from the light output device 400 to be less than the luminance of the second projection image LTb output from the light output device 400.

For example, the signal processing device 170 may control, of the digital mirror device 308, an area (or region) corresponding to the first projection image LTa to be turned off during a first period.

Here, the signal processing device 170 may control, of the digital mirror device 308, an area (or region) corresponding to the second projection image LTb to be switched on or off during the first period.

That is, during the first period, the signal processing device 170 may control such that, of the digital mirror device 308, the area corresponding to the first projection image LTa is turned off more (the number of turn-offs) or is turned off more frequently (the frequency of turn-off) than the area corresponding to the second projection image LTb. This allows the luminance of the first projection image LTa output from the light output device 400 to be lower than the luminance of the second projection image LTb output from the light output device 400.

As another example, the signal processing device 170 may control, during the first period, a light source corresponding to the first projection image LTa to be at least partially turned off and a light source corresponding to the second projection image LTb to be switched on or off.

That is, the signal processing device 170 may control such that, of the light source 309, the light source corresponding to the first projection image LTa is turned off more (the number of turn-offs) or is turned off more frequently (the frequency of turn-off) than the light source corresponding to the second projection image LTb during the first period. This allows the luminance of the first projection image LTa output from the light output device 400 to be lower than the luminance of the second projection image LTb output from the light output device 400.

Meanwhile, based on external illuminance Cso from the external illuminance sensor 711, internal illuminance Csi from the internal illuminance sensor 713, or a setting input Csp from the user input device 110, the signal processing device 170 may perform operation control of the digital mirror device 308 or the light source 309.

For example, in response to an increase in external illumination Cso, the signal processing device 170 may control, for each frame, luminance of the first projection image LTa output from the light output device 400 to be less than luminance of the second projection image LTb output from the light output device 400.

As another example, in response to a decrease in internal illumination Csi, the signal processing device 170 may control, for each frame, luminance of the first projection image LTa output from the light output device 400 to be less than luminance of the second projection image LTb output from the light output device 400.

As another example, in response to a decrease the setting input Csp, the signal processing device 170 may control, for each frame, luminance of the first projection image LTa output from the light output device 400 to be less than luminance of the second projection image LTb output from the light output device 400.

Accordingly, a luminance difference between the first projection image LTa projected onto the screen Scr and the second projection image LTb reflected on the windshield WS may be reduced.

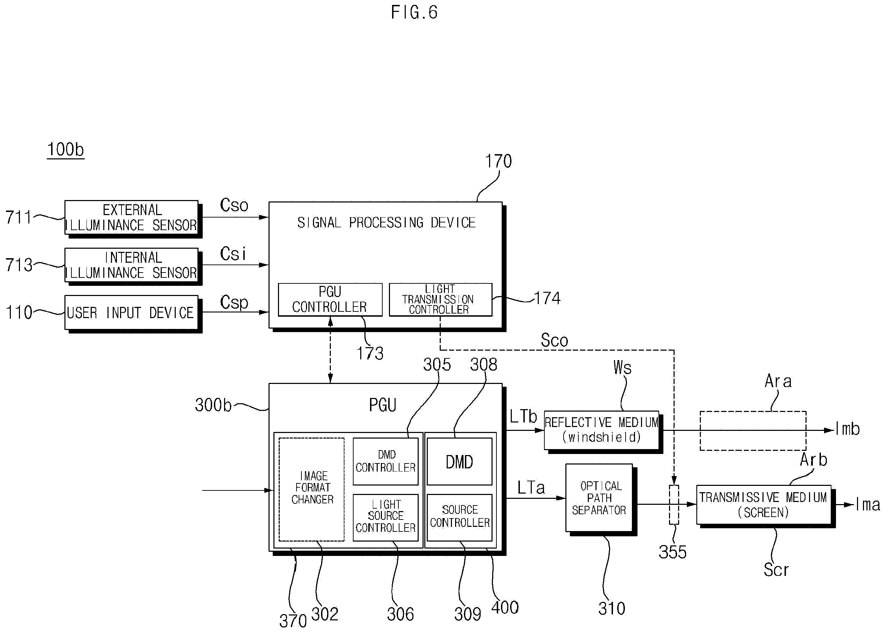

FIG. 6 illustrates another example of an internal block diagram of the vehicle display apparatus of FIGS. 4A to 4B.

Referring to FIG. 6, a vehicle display apparatus 100b according to an embodiment of the present disclosure is similar to the vehicle display apparatus 100 of FIG. 5, but differs in that an image format changer 302 is further provided in a picture generation device 300b. The difference will be mainly described below.

The picture generation device 300b outputs a projection image based on an input image from an external input or an input image from a signal processing device 170.

Here, the image format changer 302 in the picture generation device 300b may change an image format of the input image from the external input or the input image from the signal processing device 170.

For example, in case in which the frame rate of an input image is a first frame rate, the picture generation device 300b may change the frame rate to a second frame rate.

More specifically, in case in which the frame rate of an input image is 60 Hz, the picture generation device 300b may increase and change the frame rate to 120 Hz.

Meanwhile, the image format changer 302 may be provided in a processor 370.

Meanwhile, in a first mode, the signal processing device 170 may control a light output device 400 to output a first projection image LTa and a second projection image LTb at the first frame rate.

Also, in a second mode after the first mode, the signal processing device 170 may control such that the light output device 400 outputs the first projection image LTa and the second projection image LTb at the second frame rate, which is greater than the first frame rate, while controlling luminance of the first projection image LTa to be less than luminance of the second projection image LTb.

Accordingly, a luminance difference between the first projection image LTa projected onto the screen Scr and the second projection image LTb reflected on the windshield WS may be reduced while implementing the plurality of displays 180a and 180h in an integrated manner.

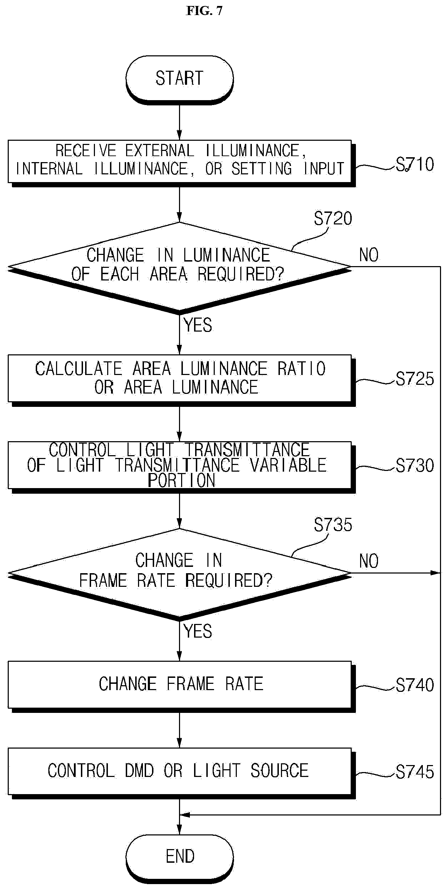

FIG. 7 is a flowchart illustrating an example of the operation of the display apparatus for a vehicle according to an embodiment of the present disclosure.

Referring to FIG. 7, the signal processing device 170 in the vehicle display apparatus 100 receives external illuminance Cso from the external illuminance sensor 711, internal illuminance Csi from the internal illuminance sensor 713, or a setting input Csp from the user input device 110 (S710).

Next, in case in which outputting a projection image, the signal processing device 170 determines whether to change luminance in an area corresponding to the screen Scr or the area Ara on which a HUD image is displayed(S720).

For example, in case in which a luminance difference between a first projection image LTa projected onto the screen Scr and a second projection image LTb reflected on the windshield WS is greater than or equal to a predetermined value, the signal processing device 170 may determine that a change in luminance is required.

In detail, in case in which luminance of the first projection image LTa reflected from the optical path separator 310 is greater than luminance of the second projection image LTb reflected from the windshield WS, and its difference is determined to be greater than or equal to a predetermined value, the signal processing device 170 may determine that a luminance change is required.

As another example, based on an increase in external illuminance Cso, based on a decrease in internal illuminance Csi, or based on a decrease in setting input Csp, the signal processing device 170 may determine that a decrease in luminance of the area corresponding to the screen Scr needs to be reduced.

Next, in case in which it is determined that a change in the luminance of the area corresponding to the screen Scr or the area Ara where the HUD image is required, the signal processing device 170 may calculate an area luminance ratio or area luminance (S725).

Also, the signal processing device 170 may control light transmittance of the light transmittance changer 355 (S730).

For example, in case in which luminance of the first projection image LTa reflected from the optical path separator 310 is greater than luminance of the second projection image LTb reflected from the windshield WS, and its difference increases, the signal processing device 170 may control the light transmittance of the first projection image LTa to decrease.

Accordingly, a luminance difference between the first projection image LTa projected onto the screen Scr and the second projection image LTb reflected on the windshield WS may be reduced while implementing the plurality of displays 180a and 180h in an integrated manner.

Next, the signal processing device 170 may determine whether to change a frame rate (S735). In case in which it is determined that a change of the frame rate is required, the signal processing device 170 may change the frame rate (S740). Then, in response to the changed frame rate, the signal processing device 170 may control the digital mirror device 308 or the light source 309 (S745).

In other words, in the second mode after the first mode, the signal processing device 170 may control the light output device 400 to output the first projection image LTa and the second projection image LTa at the second frame rate greater than the first frame rate, and control the luminance of the first projection image LTa to be less than the luminance of the second projection image LTb.

For example, in case in which the frame rate of an input image is 60 Hz, the picture generation device 300b may increase and change the frame rate to 120 Hz, and may control luminance of the first projection image LTa output from the light output device 400 to be less than luminance of the second projection image LTb output from the light output device 400. Accordingly, a luminance difference between the first projection image LTa projected onto the screen Scr and the second projection image LTb reflected on the windshield WS may be reduced while implementing the plurality of displays 180a and 180h in an integrated manner.

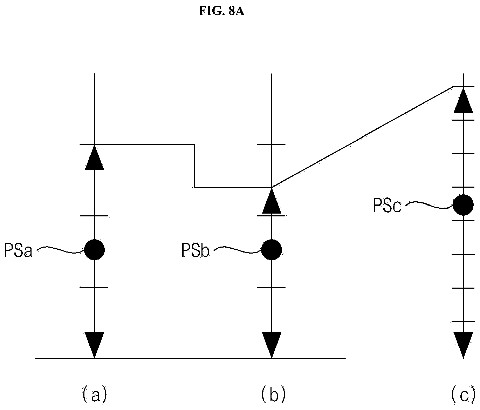

FIGS. 8A to 11D are reference views for explaining FIG. 7.

FIG. 8A illustrates an example of a setting input from the user input device 110.

Referring to FIG. 8A, a light source brightness setting item Psa, a screen luminance setting item PSb, and a transmittance setting item Psc of the light transmittance changer 355 may be displayed on the cluster display 180a or the AVN display 180b.

In response to a setting input to the light source brightness setting item Psa, the screen luminance setting item PSb, or the transmittance setting item Psc of the light transmittance changer 355, the signal processing device 170 may control light source brightness, a screen luminance setting, or light transmittance of the light transmittance changer 355.

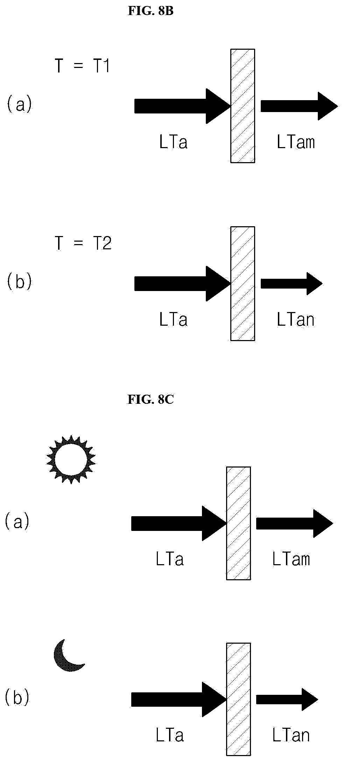

FIG. 8B illustrates that light transmittance of the light transmittance changer 355 is varied in a first mode and a second mode.

As shown in (a) of FIG. 8B, the signal processing device 170 controls, in the first mode (T=T1), the light transmittance of the light transmittance changer 355 to be a first light transmittance. Accordingly, the light transmittance changer 355 outputs a first projection image LTam.

Meanwhile, in case in which a luminance difference between a second projection image LTb and a first projection image LTa is a first value, the signal processing device 170 may control, in the second mode, the luminance difference between the second projection image LTb and the first projection image LTa to be a second value lower than the first value.

That is, as shown in (b) of FIG. 8B, the signal processing device 170 controls, in the second mode (T=T2), the light transmittance of the light transmittance changer 355 to be a second light transmittance lower than the first light transmittance. Accordingly, the light transmittance changer 355 outputs a second projection image LTan, which is lower in luminance than the first projection image LTam.

Thus, a luminance difference between the first projection image LTa projected onto the screen Scr and the second projection image LTb reflected on the windshield WS may be reduced while implementing the plurality of displays 180a and 180h in an integrated manner.

FIG. 8C illustrates that light transmittance of the light transmittance changer 355 is varied in a day mode and a night mode.

Referring to the drawing, the signal processing device 170 controls the light transmittance of the light transmittance changer 355 to be a first light transmittance in the day mode, as shown in (a) of FIG. 8C. Accordingly, the light transmittance changer 355 outputs a first projection image LTam.

Meanwhile, in case in which a luminance difference between a second projection image LTb and a first projection image LTa is a first value, the signal processing device 170 may control, in the night mode, which is the second mode, the luminance difference between the second projection image LTb and the first projection image LTa to be a second value smaller than the first value.

That is, as shown in (b) of FIG. 8C, the signal processing device 170 controls, in the night mode, the light transmittance of the light transmittance changer 355 to be a second light transmittance smaller than the first light transmittance. Accordingly, the light transmittance changer 355 outputs a second projection image LTan, which is lower in luminance than the first projection image LTam.

Thus, a luminance difference between the first projection image LTa projected onto the screen Scr and the second projection image LTb reflected on the windshield WS may be reduced while implementing the plurality of displays 180a and 180h in an integrated manner.

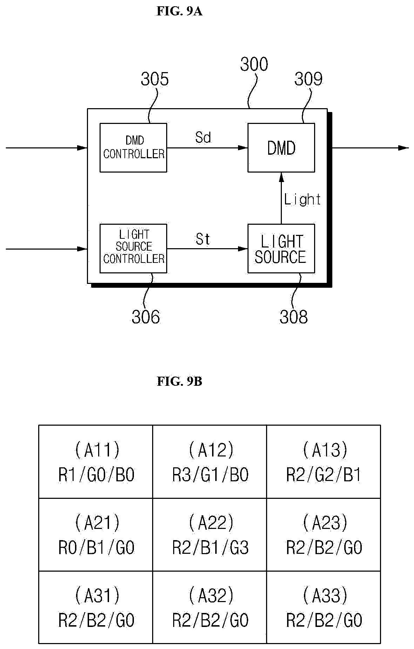

FIG. 9A illustrates the control of a light source and a digital mirror device in the picture generation device 300.

Referring to FIG. 9A, the digital mirror controller 305 in the picture generation device 300 may output a control signal Sd to control the digital mirror device 308, and the light source controller 306 may output a control signal St to control the light source 309.

Meanwhile, the luminance of a projection image output from the picture generation device 300 may be determined by luminance of the light source 309, an on-time ratio of the light source 309, an on-time ratio of the digital mirror device 308, and light reflectance of the digital mirror device 308.

FIG. 9B illustrates an example of the digital mirror device 308.

Referring to FIG. 9B, the digital mirror device 308 may include a plurality of digital mirrors (A11-A33) in a matrix form.

For ease of description, FIG. 9B illustrates digital mirrors in a 3*3 matrix form as an example.

Meanwhile, R, G, and B light sources may be disposed in each digital mirror.

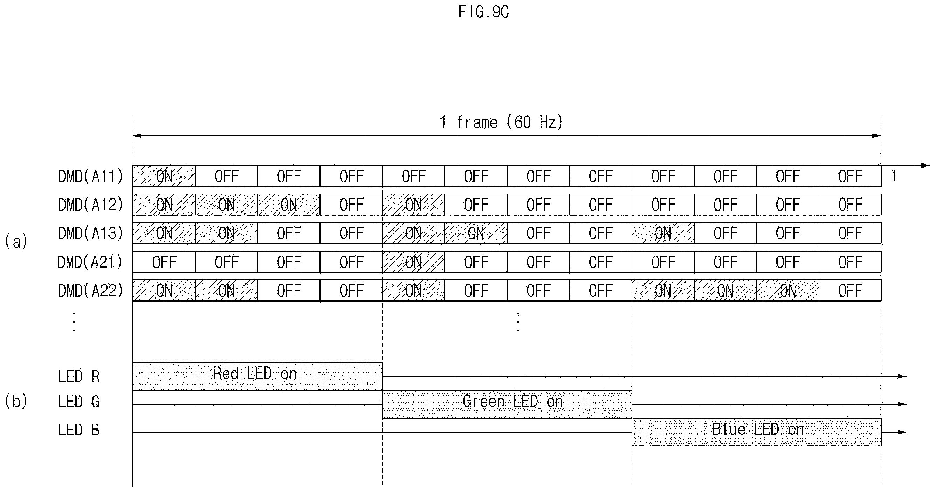

FIG. 9C illustrates that the picture generation device 300 outputs a projection image according to the first frame rate (e.g., 60 Hz).

Referring to FIG. 9C, R, G, and B light sources disposed in each digital mirror are operated, as shown in (b) of FIG. 9C, and the plurality of digital mirrors (A11∼A33) may be turned on or off, as shown in (a) of FIG. 9C.

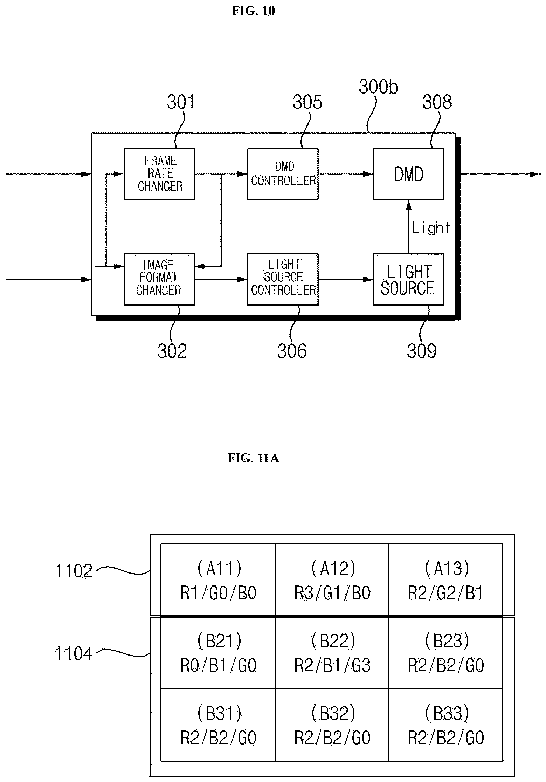

FIG. 10 illustrates the control of a digital mirror device and a light source in the picture generation device 300b.

Referring to FIG. 10, the digital mirror controller 305 in the picture generation device 300b outputs a control signal Sd to control the digital mirror device 308, and the light source controller 306 outputs a control signal Sd to control the light source 309.

Unlike FIG. 9A, the picture generation device 300b may further include an image format changer 302 and a frame rate controller 301.

However, unlike shown in FIG. 10, the picture generation device 300b may not include the frame rate controller 301, and the frame rate control may be performed by the image format changer 302.

Meanwhile, the luminance of a projection image output from the picture generation device 300b may be determined by luminance of the light source 309, an on-time ratio of the light source 309, an on-time ratio of the digital mirror device 308, and light reflectance of the digital mirror device 308.

FIG. 11A illustrates an example of the digital mirror device 309.

Referring to FIG. 110A, the digital mirror device 309 may include a plurality of digital mirrors (A11~A13, B21~B33) in a matrix form.

Meanwhile, among the plurality of digital mirrors (A11∼A13, B21∼B33), some (B21∼B33) 1104 may output a first projection image LTa displayed on the screen, and others (A11~A13) 1102 may output a second projection image LTb reflected from the windshield WS.

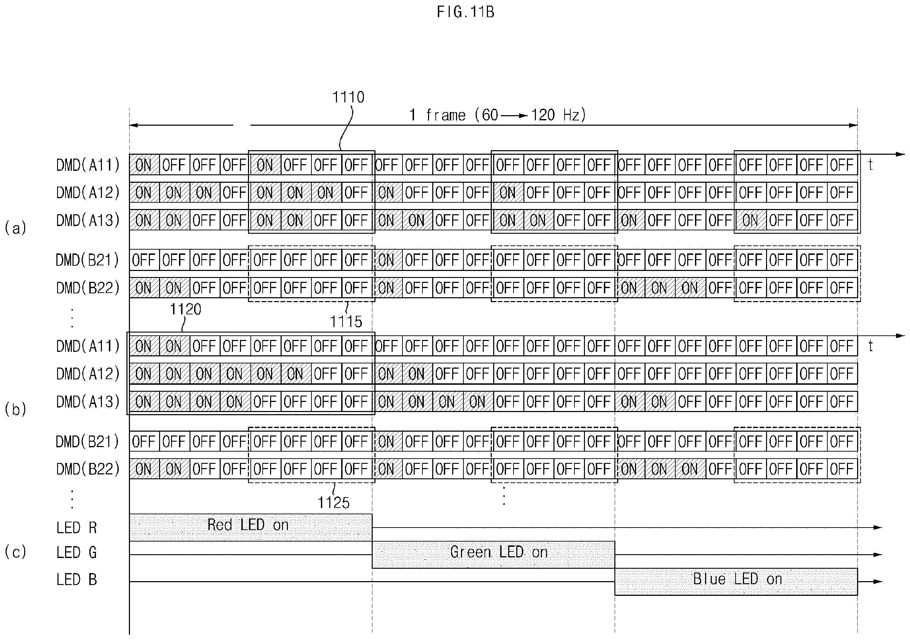

FIG. 11B illustrates that the picture generation device 300b outputs a projection image according to the second frame rate (e.g., 120 Hz) higher than the first frame rate.

As shown in (c) of FIG. 11B, R, G, and B light sources disposed in each of the digital mirrors (A11∼A13, B21∼B33) are operated, and as shown in (a) of FIG. 11B, an input image may be repeated in response to an increase in the frame rate.

According to (a) of FIG. 11B, the frame rate controller 301 in the picture generation device 300b changes the frame rate to the second frame rate higher than the first frame rate, and the image format changer 302 repeats, based on the second frame rate, part of an input image for the second projection image LTb, and turns off part of an input image for the first projection image LTa.

That is, during a first period, the signal processing device 170 may control, of the plurality of digital mirrors (A11~A13, B21~B33), an area 1115 corresponding to the first projection image LTa to be turned off and an area 1110 corresponding to the second projection image LTb to be switched on or off.

According to (a) of FIG. 11B, the others (A11∼A13) 1102, among the plurality of digital mirrors (A11~A13, B21∼B33), may be repeatedly operated in response to an increase in the frame rate.

Meanwhile, unlike (a) of FIG. 11B, the others (A11~A13) 1102, among the plurality of digital mirrors (A11~A13, B21∼B33), may have rearrangement of an on-period and an off-period in response to an increase in the frame rate, instead of repeating the same pattern.

According to (b) of FIG. 11B, during a second period including the first period, the others (A11∼A13) 1102, among the plurality of digital mirrors (A11∼A13, B21∼B33) are turned on and off, respectively.

Here, of the digital mirror device 308, the area 1115 corresponding to the first projection image LTa is turned off during the first period.

Accordingly, although the driving scheme of (b) of FIG. 11B is different from that of (a) of FIG. 11B, a projection image with the same luminance may be output.

That is, a luminance difference between the first projection image LTa projected onto the screen Scr and the second projection image LTb reflected on the windshield WS may be reduced while implementing the plurality of displays 180a and 180h in an integrated manner.

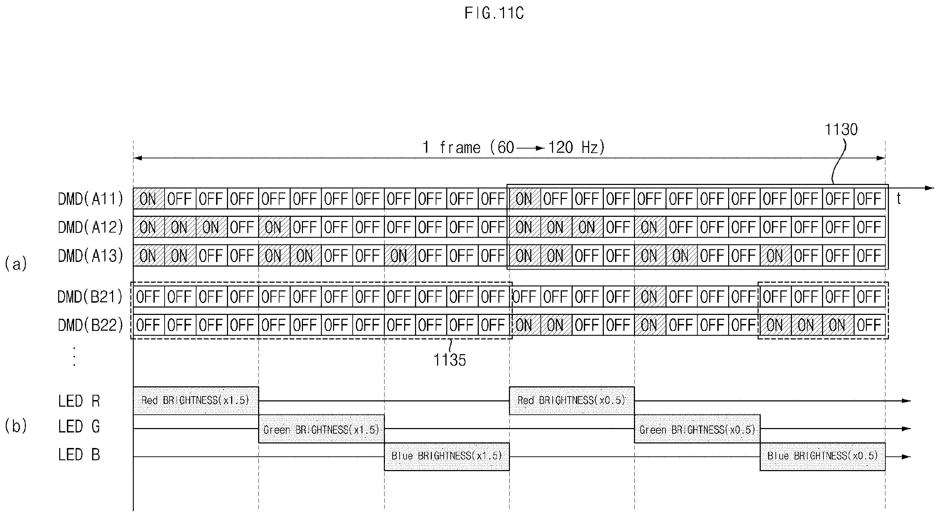

FIG. 11C illustrates an example of the light source 309 driven in a time-division manner.

Referring to the drawing, as compared with FIG. 11B, R, G, and B light sources are driven in a time-division manner, and as shown in (b) of FIG. 11C, the luminance of the R, G, and B light sources in a first light source driving period may be higher than the luminance of the R, G, and B light sources in a second light source driving period.

FIG. 11C illustrates that the luminance of the light source during the first light source driving period increases by 1.5 times compared to that of FIG. 11B, and the luminance of the light source during the second light source driving period increases by 0.5 times compared to that of FIG. 11B.

Meanwhile, as shown in (a) of FIG. 11C, the signal processing device 170 may control, of the plurality of digital mirrors (A11∼A13, B21~B33), an area 1135 corresponding to the first projection image LTa to be turned off during the first light source driving period.

Here, as shown in (a) of FIG. 11C, the signal processing device 170 may control, of the plurality of digital mirrors (A11~A13, B21~B33), an area corresponding to the second projection image LTb to be switched on or off during the first light source driving period.

Then, as shown in (a) of FIG. 11C, the signal processing device 170 may control, of the plurality of digital mirrors (A11~A13, B21~B33), an area 1130 corresponding to the second projection image LTb to be switched on or off repeatedly during the second light source driving period.

Accordingly, a luminance difference between the first projection image LTa projected onto the screen Scr and the second projection image LTb reflected on the windshield WS may be reduced while implementing the plurality of displays 180a and 180h in an integrated manner.

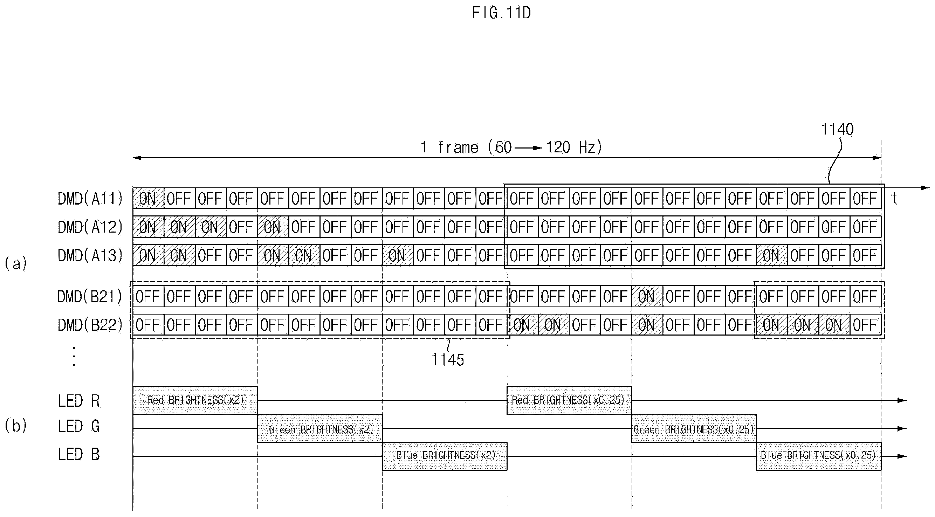

FIG. 11D illustrates another example of the light source 309 driven in a time-division manner.

Referring to the drawing, as compared with FIG. 11B, R, G, and B light sources are driven in a time- division manner, and as shown in (b) of FIG. 11D, the luminance of the R, G, and B light sources in a first light source driving period may be higher than the luminance of the R, G, and B light sources in a second light source driving period.

FIG. 11D illustrates that the luminance of the light source during the first light source driving period increases by 2 times compared to that of FIG. 11B, and the luminance of the light source during the second light source driving period increases by 0.25 times compared to that of FIG. 11B.

Meanwhile, as shown in (a) of FIG. 11D, the signal processing device 170 may control, of the plurality of digital mirrors (A11∼A13, B21~B33), an area 1145 corresponding to the first projection image LTa to be turned off during the first light source driving period.

Here, as shown in (a) of FIG. 11D, the signal processing device 170 may control, of the plurality of digital mirrors (A11∼A13, B21∼B33), an area corresponding to the second projection image LTb to be switched on or off during the first light source driving period.

Then, as shown in (a) of FIG. 11D, the signal processing device 170 may control, of the plurality of digital mirrors (A11~A13, B21~B33), an area 1140 corresponding to the second projection image LTb to be switched on or off repeatedly during the second light source driving period.

Accordingly, a luminance difference between the first projection image LTa projected onto the screen Scr and the second projection image LTb reflected on the windshield WS may be reduced while implementing the plurality of displays 180a and 180h in an integrated manner.

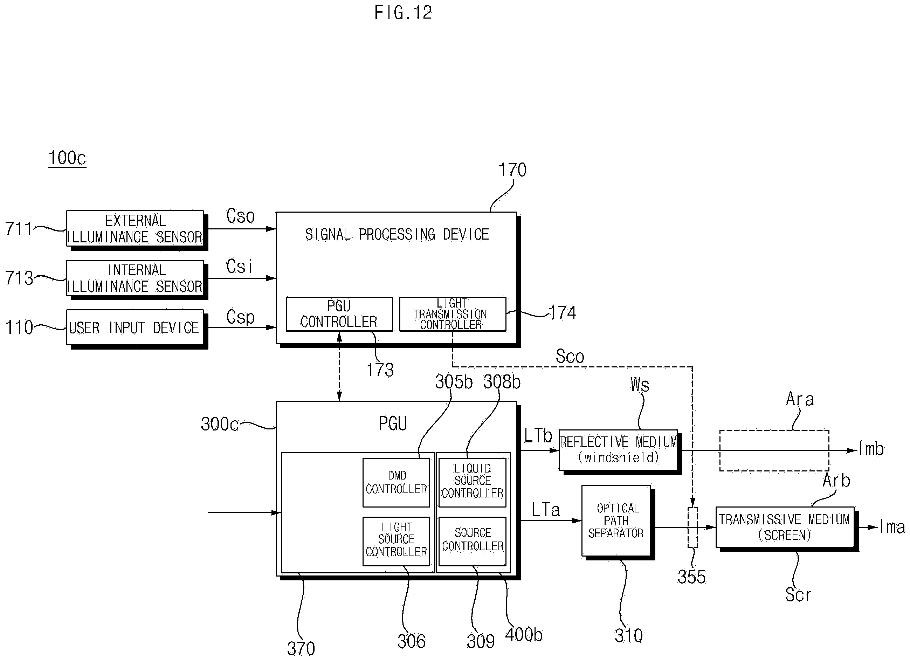

FIG. 12 illustrates yet another example of an internal block diagram of the vehicle display apparatus of FIGS. 4A to 4B.

Referring to FIG. 12, a vehicle display apparatus 100c of this embodiment includes a signal processing device 170, a picture generation device 300c, an optical path separator 310, and a light transmittance changer 355, a screen Scr, and a windshield WS.

The vehicle display apparatus 100c of FIG. 12 is similar to the vehicle display apparatus 100 of FIG. 5, but differs in that a liquid crystal panel 308b is provided instead of the digital mirror device 308. The difference will be mainly described below.

A first projection image LTa, which is part of a projection image output from the picture generation device 300c, may be reflected by the optical path separator 310. Therefore, the optical path separator 310 may also be referred to as a light reflector.

A second projection image LTb, which is another part of the projection image output from the picture generation device 300c, is output to the windshield WS and is reflected from the windshield WS, which is a reflective medium.

The signal processing device 170 may control light transmittance of the light transmittance changer 355.

For example, as a level or pulse width of a light transmission control signal Sco output from the signal processing device 170 increases, the light transmittance of the light transmittance changer 355 may increase.

Meanwhile, the first projection image LTa that has passed through the light transmittance changer 355 may be incident on the screen Scr, which is a transmissive medium, allowing a cluster image Ima to be displayed.

The second projection image LTb reflected from the windshield WS may be displayed as a HUD image Imb in a predetermined area Ara.

Meanwhile, the vehicle display apparatus 100c of this embodiment may further include an external illuminance sensor 711, an internal illuminance sensor 713, or a user input device 110.

Based on external illuminance Cso from the external illuminance sensor 711, internal illuminance Csi from the internal illuminance sensor 713, or a setting input Csp from the user input device 110, the signal processing device 170 may output a control signal Sco for controlling the light transmittance of the light transmittance changer 355.

Accordingly, a luminance difference between the first projection image LTa projected onto the screen Scr and the second projection image LTb reflected on the windshield WS may be reduced.

Meanwhile, in case in which a difference between external illuminance of the vehicle 200 and internal illuminance of the vehicle 200 increases, the signal processing device 170 may control light transmittance of the first projection image LTa to decrease. Accordingly, a luminance difference between the first projection image LTa projected onto the screen Scr and the second projection image LTb reflected on the windshield WS may be reduced.

Meanwhile, the picture generation device 300c includes a light output device 400b to output light.

The light output device 400b may include a light source 309 and a liquid crystal panel 308b that reflects light output from the light source 309.

For example, the light source 309 may include an LED diode, a laser diode, or the like.

The liquid crystal panel 308b may include a plurality of pixels for driving the liquid crystal. For example, the pixel may include a switching element to which a scan signal and a data signal are applied.

Meanwhile, the picture generation device 300c may further include a panel controller 305b to control the liquid crystal panel 308b, and a light source controller 306 to control the light source 309.

In particular, the picture generation device 300c may include a processor 370, and the processor 370 may include the panel controller 305b to control the liquid crystal panel 308b, and the light source controller 306 to control the light source 309.

Meanwhile, in order to reduce a difference in luminance between the first projection image LTa projected onto the screen Scr and the second projection image LTb reflected on the windshield WS, the signal processing device 170 may control, for each frame, the luminance of the first projection image LTa output from the light output device 400b to be less than the luminance of the second projection image LTb output from the light output device 400b.

For example, the signal processing device 170 may control, of the liquid crystal panel 308b, an area corresponding to the first projection image LTa to be turned off during a first period.

Here, the signal processing device 170 may control, of the liquid crystal panel 308b, an area corresponding to the second projection image LTb to be switched on or off during the first period.

That is, during the first period, the signal processing device 170 may control such that, of the liquid crystal panel 308b, the area corresponding to the first projection image LTa is turned off more (the number of turn-offs) or is turned off more frequently (the frequency of turn-off) than the area corresponding to the second projection image LTb. This allows the luminance of the first projection image LTa output from the light output device 400b to be lower than the luminance of the second projection image LTb output from the light output device 400b.

As another example, the signal processing device 170 may control, during the first period, a light source corresponding to the first projection image LTa to be at least partially turned off and a light source corresponding to the second projection image LTb to be switched on or off.

That is, during the first period, the signal processing device 170 may control such that, of the light source 309, the light source corresponding to the first projection image LTa is turned off more (the number of turn-offs) or is turned off more frequently (the frequency of turn-off) than the light source corresponding to the second projection image LTb. This allows the luminance of the first projection image LTa output from the light output device 400b to be lower than the luminance of the second projection image LTb output from the light output device 400b.

Meanwhile, based on external illuminance Cso from the external illuminance sensor 711, internal illuminance Csi from the internal illuminance sensor 713, or a setting input Csp from the user input device 110, the signal processing device 170 may perform the operation control of the liquid crystal panel 308b or the light source 309.

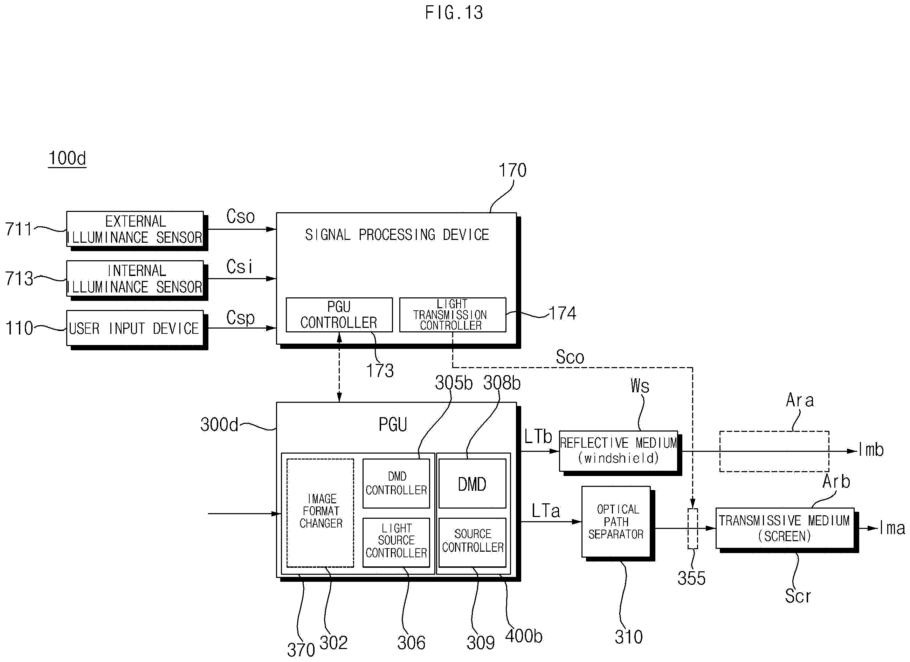

FIG. 13 illustrates yet another example of an internal block diagram of the vehicle display apparatus of FIGS. 4A to 4B.

Referring to FIG. 13, a vehicle display apparatus 100d of this embodiment is similar to the vehicle display apparatus 100c of FIG. 12, but differs in that an image format changer 302 is provided in a picture generation device 300d. The difference will be mainly described below.

The picture generation device 300d outputs a projection image based on an input image from an external input or an input image from a signal processing device 170.

Here, the image format changer 302 in the picture generation device 300d may change an image format of the input image from the external input or the input image from the signal processing device 170.

For example, in case in which the frame rate of an input image is a first frame rate, the picture generation device 300d may change the frame rate to a second frame rate.

More specifically, in case in which the frame rate of an input image is 60 Hz, the picture generation device 300d may increase and change the frame rate to 120 Hz.

Meanwhile, the image format changer 302 may be provided in a processor 370.

Meanwhile, in a first mode, the signal processing device 170 may control the light output device 400b to output a first projection image LTa and a second projection image LTb at the first frame rate.

Also, in a second mode after the first mode, the signal processing device 170 may control such that the light output device 400b outputs the first image LTa and the second projection image LTa at a second frame rate greater than the first frame rate, while controlling luminance of the first projection image LTa output from the light output device 400b to be lower than luminance of the second projection image LTb output from the light output device 400b.

Accordingly, a luminance difference between the first projection image LTa projected onto the screen Scr and the second projection image LTb reflected on the windshield WS may be reduced while implementing the plurality of displays 180a and 180h in an integrated manner.

The operations of FIGS. 5 to 11D may be equally applied to FIGS. 12 to 13.

However, instead of the digital mirror device 308, a liquid crystal panel 308b may be employed.

That is, the signal processing device 170 may control, of the liquid crystal panel 308b, an area corresponding to the first projection image LTa to be turned off during a first period.

Meanwhile, the signal processing device 170 may control, of the liquid crystal panel 308b, an area corresponding to the second projection image LTb to be switched on or off during the first period.

Accordingly, a luminance difference between the first projection image LTa projected onto the screen Scr and the second projection image LTb reflected on the windshield WS may be reduced while implementing the plurality of displays 180a and 180h.

Meanwhile, the signal processing device 170 may control, of a plurality of liquid crystal panel pixels (A11-A33), an area (A21∼A33) corresponding to the first projection image LTa to be turned off.

Here, the signal processing device 170 may control, of the plurality of liquid crystal panel pixels (A11-A33), an area (A11 to A13) corresponding to the second projection image LTb to be switched on or off.

Similarly, based on local dimming, the signal processing device 170 may control, of the plurality of liquid crystal panel pixels (A11~A33), a light source disposed in an area (A21~A33) corresponding to the first projection image LTa to be turned off.

Here, based on local dimming, the signal processing device 170 may control, of the plurality of liquid crystal panel pixels (A11~A33), a light source disposed in an area (A11 to A13) corresponding to the second projection image LTb to be switched on or off.

Accordingly, a luminance difference between the first projection image LTa projected onto the screen Scr and the second projection image LTb reflected on the windshield WS may be reduced while implementing the plurality of displays 180a and 180h in an integrated manner.

Meanwhile, in some embodiments, the vehicle display apparatus may be implemented using a method such as liquid crystal on silicon (LCos), OLED on Silicon (OLEDos), or LED on silicon (LEDos), in addition to the digital mirror device of FIG. 5 and the liquid crystal panel of FIG 12.

As described above, a display apparatus for a vehicle according to an embodiment of the present disclosure includes a picture generation device including a light output device and configured to output a projection image, an optical path separator configured to reflect a first projection image corresponding to a part of the projection image from the picture generation device, a light transmittance changer configured to change light transmittance of the first projection image reflected from the optical path separator, a screen having one surface onto which the first projection image passing through the light transmittance changer is projected, and a signal processing device configured to control light transmittance of the light transmittance changer. The picture generation device outputs a second projection image corresponding to another part of the projection image to a windshield. Accordingly, a luminance difference between the first projection image projected onto the screen and the second projection image reflected on the windshield may be reduced while implementing a plurality of displays in an integrated manner.

Meanwhile, the signal processing device may be configured to, in case in which luminance of the first projection image reflected from the optical path separator is greater than luminance of the second projection image reflected from the windshield and a luminance difference between the first projection image and the second projection image increases, decrease the light transmittance of the first projection image. Accordingly, a luminance difference between the first projection image projected onto the screen and the second projection image reflected on the windshield may be reduced while implementing a plurality of displays in an integrated manner.

Meanwhile, the signal processing device may be configured to control the light transmittance of the first projection image to be lower at night than during day. Accordingly, a luminance difference between the first projection image projected onto the screen and the second projection image reflected on the windshield may be reduced while implementing a plurality of displays in an integrated manner.

Meanwhile, the signal processing device may be configured to control output power of the light output device to be lower at night than during day. Accordingly, a luminance difference between the first projection image projected onto the screen and the second projection image reflected on the windshield may be reduced while implementing a plurality of displays in an integrated manner.

Meanwhile, the signal processing device may be configured to control the light transmittance of the first projection image to be at a first level in a first mode, and control the light transmittance of the first projection image to be at a second level in a second mode. Accordingly, a luminance difference between the first projection image projected onto the screen and the second projection image reflected on the windshield may be reduced while implementing a plurality of displays in an integrated manner.

Meanwhile, the signal processing device may be configured to, in case in which a luminance difference between the second projection image and the first projection image is a first value in the first mode, control, in the second mode, the luminance difference between the second projection image and the first projection image to be a second value lower than the first value. Accordingly, a luminance difference between the first projection image projected onto the screen and the second projection image reflected on the windshield may be reduced while implementing a plurality of displays in an integrated manner.

Meanwhile, the signal processing device may be configured to change internal illumination of the vehicle, or a setting input, the light transmittance of the first projection image control based on at least one of external illumination of the vehicle. Accordingly, based on the external illuminance, the internal illuminance, or the setting input, a luminance difference between the first projection image projected onto the screen and the second projection image reflected on the windshield may be reduced.

Meanwhile, the signal processing device may be configured to decrease the light transmittance of the first projection image, in response to an increase in difference between external illuminance of the vehicle and internal illuminance of the vehicle. Accordingly, a luminance difference between the first projection image projected onto the screen and the second projection image reflected on the windshield may be reduced while implementing a plurality of displays in an integrated manner.

Meanwhile, the signal processing device may be configured to control, for each frame, luminance of the first projection image output from the light output device to be less than luminance of the second projection image output from the light output device. Accordingly, a luminance difference between the first projection image projected onto the screen and the second projection image reflected on the windshield may be reduced while implementing a plurality of displays in an integrated manner.

The signal processing device may be configured to output the first projection image and the second projection image from the the light output device at a first frame rate in a first mode, and output the first projection image and the second projection image from the light output device at a second frame rate greater than the first frame rate control in a second mode after the first mode, while controlling luminance of the first projection image output from the light output device to be less than luminance of the second projection image output from the light output device. Accordingly, a luminance difference between the first projection image projected onto the screen and the second projection image reflected on the windshield may be reduced while implementing a plurality of displays in an integrated manner.

Meanwhile, the light output device may include a light source and a digital mirror device configured to reflect light output from the light source. The signal processing device may be configured to turn off an area corresponding to the first projection image of the digital mirror device during a first period. Accordingly, a luminance difference between the first projection image projected onto the screen and the second projection image reflected on the windshield may be reduced while implementing a plurality of displays in an integrated manner.

Meanwhile, the signal processing device may be configured to switch on or off an area corresponding to the second projection image of the digital mirror device during the first period. Accordingly, a luminance difference between the first projection image projected onto the screen and the second projection image reflected on the windshield may be reduced while implementing a plurality of displays in an integrated manner.

Meanwhile, the light output device may include a light source and a liquid crystal panel configured to output the first projection image and the second projection image based on light output from the light source. The signal processing device may be configured to turn off an area corresponding to the first projection image of the liquid crystal panel during a first period. Accordingly, a luminance difference between the first projection image projected onto the screen and the second projection image reflected on the windshield may be reduced while implementing a plurality of displays in an integrated manner.

Meanwhile, the signal processing device may be configured to switch on or off an area corresponding to the second projection image of the liquid crystal panel during the first period. Accordingly, a luminance difference between the first projection image projected onto the screen and the second projection image reflected on the windshield may be reduced while implementing a plurality of displays in an integrated manner.

Meanwhile, the light transmittance changer may be attached onto the one surface of the screen. Accordingly, a luminance difference between the first projection image projected onto the screen and the second projection image reflected on the windshield may be reduced while implementing a plurality of displays in an integrated manner.

Meanwhile, the display apparatus may further include a diffusion portion disposed between the picture generation device and the windshield. Accordingly, a luminance difference between the first projection image projected onto the screen and the second projection image reflected on the windshield may be reduced while implementing a plurality of displays in an integrated manner.

The light transmittance changer may include an electrochromic material, a liquid crystal, or a suspended particle. Accordingly, a luminance difference between the first projection image projected onto the screen and the second projection image reflected on the windshield may be reduced while implementing a plurality of displays in an integrated manner.

A display apparatus for a vehicle according to another embodiment of the present disclosure includes a picture generation device including a light output device and configured to output a projection image, a light transmittance changer configured to change light transmittance of a first projection image corresponding to a part of the projection image from the picture generation device, an optical path separator configured to reflect the first projection image passing through the light transmittance changer, a screen having one surface onto which the first projection image reflected from the optical path separator is projected, and a signal processing device configured to control light transmittance of the light transmittance changer. The picture generation device outputs a second projection image corresponding to another part of the projection image to a windshield. Accordingly, a luminance difference between the first projection image projected onto the screen and the second projection image reflected on the windshield may be reduced implementing a plurality of displays in an integrated manner.

## Claims

1. A display apparatus (100) for a vehicle, the display apparatus comprising:
a picture generation device (300) comprising a light output device (400) and configured to output a projection image;
an optical path separator (310) configured to reflect a first projection image corresponding to a part of the projection image from the picture generation device;
a light transmittance changer (350) configured to change light transmittance of the first projection image reflected from the optical path separator (310);
a screen (Scr) having one surface onto which the first projection image (LTa) passing through the light transmittance changer is projected; and
a signal processing device (170) configured to control light transmittance of the light transmittance changer,
wherein the picture generation device (300) outputs a second projection image (LTb) corresponding to another part of the projection image to a windshield (WS).

2. The display apparatus of claim 1, wherein in case in which luminance of the first projection image reflected from the optical path separator is greater than luminance of the second projection image reflected from the windshield and a luminance difference between the first projection image and the second projection image increases, the signal processing device (170) is configured to decrease the light transmittance of the first projection image.

3. The display apparatus of any one of claims 1 to 2, wherein the signal processing device (170) is configured to control the light transmittance of the first projection image to be lower at night than during day.

4. The display apparatus of any one of claims 1 to 3, wherein the signal processing device (170) is configured to control output power of the light output device to be lower at night than during day.

5. The display apparatus of any one of claims 1 to 4, wherein the signal processing device (170) is configured to:
control the light transmittance of the first projection image to be at a first level in a first mode; and
control the light transmittance of the first projection image to be at a second level in a second mode.

6. The display apparatus of claim 5, wherein in case in which a luminance difference between the second projection image and the first projection image is a first value in the first mode, the signal processing device (170) is configured to control the luminance difference between the second projection image and the first projection image to be a second value lower than the first value in the second mode.

7. The display apparatus of any one of claims 1 to 6, wherein the signal processing device (170) is configured to change internal illumination of the vehicle, or a setting input, the light transmittance of the first projection image based on at least one of external illumination of the vehicle.

8. The display apparatus of any one of claims 1 to 7, wherein the signal processing device (170) is configured to decrease the light transmittance of the first projection image, in response to an increase in difference between external illuminance of the vehicle and internal illuminance of the vehicle.

9. The display apparatus of claim 1, wherein the signal processing device (170) is configured to control, for each frame, luminance of the first projection image output from the light output device to be less than luminance of the second projection image output from the light output device.

10. The display apparatus of claim 1, wherein the signal processing device (170) is configured to:
output the first projection image and the second projection image from the the light output device at a first frame rate in a first mode; and
output the first projection image and the second projection image from the light output device at a second frame rate greater than the first frame rate control in a second mode after the first mode, while controlling luminance of the first projection image output from the light output device to be less than luminance of the second projection image output from the light output device.

11. The display apparatus of claim 1, wherein the light output device (400) comprises a light source and a digital mirror device configured to reflect light output from the light source, and
wherein the signal processing device (170) is configured to turn off an area corresponding to the first projection image of the digital mirror device during a first period,
wherein the signal processing device (170) is configured to switch on or off an area corresponding to the second projection image of the digital mirror device during the first period..

12. The display apparatus of claim 1, wherein the light output device comprises a light source and a liquid crystal panel configured to output the first projection image and the second projection image based on light output from the light source, and
wherein the signal processing device (170) is configured to turn off an area corresponding to the first projection image of the liquid crystal panel during a first period,
wherein the signal processing device (170) is configured to switch on or off an area corresponding to the second projection image of the liquid crystal panel during the first period.

13. The display apparatus of any one of claims 1 to 12, wherein the light transmittance changer (355) is attached onto the one surface of the screen.

14. The display apparatus of any one of claims 1 to 13, further comprising a diffusion portion (320) disposed between the picture generation device and the windshield.

15. The display apparatus of any one of claims 1 to 14, wherein the light transmittance changer (355) comprises an electrochromic material, a liquid crystal, or a suspended particle.
